# EUROPEAN PATENT APPLICATION

(11) **EP 2 072 983 A1**
(43) Date of publication of application: **24.06.2009**
(21) Application number: 08171061.8
(22) Date of filing: 09.12.2008
(51) Int. Cl.: G01L 1/22

(54) **Mould clamping force measuring sensor**

(30) Priority: 19.12.2007 JP 2007328046
(71) Applicant: Sysko Corporation, Saitama-ken 340-0027 (JP)
(72) Inventor: Shimoda, Toshio, Soka-shi Saitama 340-0027 (JP); Beppu, Masaharu, Soka-shi Saitama 340-0027 (JP); Shimoda, Masami, Soka-shi Saitama 340-0027 (JP)
(74) Representative: Townsend, Stephen

(57) **Abstract**

A mould clamping force measuring sensor (1) is provided comprising: first (2) and second (3) semi-elliptical annulus-like sensor holders; first and second elastic fitting parts (12), each fitted in a central portion of a respective sensor holder with an end face being faced to the internal circumferential surface side of that respective sensor holder; first and second strain sensors (5) being contacted with an end face of a respective elastic fitting part; and first and second signal cables (5b), each signal cable having an end part which is solder-connected to a respective strain sensor and each signal cable being passed through a respective elastic fitting part and a wall portion of a central portion of a respective sensor holder to the outside; wherein the sensor holders (2, 3) are connected to each other at respective ends to provide an elliptical annulus-like configuration suitable for being installed on the outer circumference of a tie bar for measuring the mould clamping force applied to said tie bar by means of said strain sensors, characterised by the end face of at least one elastic fitting part (12b) being provided with elongated recessed grooves (14) for accommodating bulged portions of soldering parts of a respective signal cable.

## Description

### Technical Field

The present invention relates to a mould clamping force measuring sensor, and particularly to a mould clamping force measuring sensor for measuring the strain produced in a tie bar which is used with a mould supporting mechanism part in an injection moulding machine.

### Background to the Invention

For example, the mould which is used in an injection moulding machine is generally divided into two or more sections, and at the time of moulding, they are clamped to one another in use. In addition, with the mould clamping apparatus, tie bars are connected to the mould supporting mechanism part for the mould, and to these tie bars, a mould clamping force is applied with a strain due to that force being generated therein.

Up to now, various mould clamping force measuring sensors for measuring the strain in the tie bar that are tightly contacted with the tie bar have been proposed.

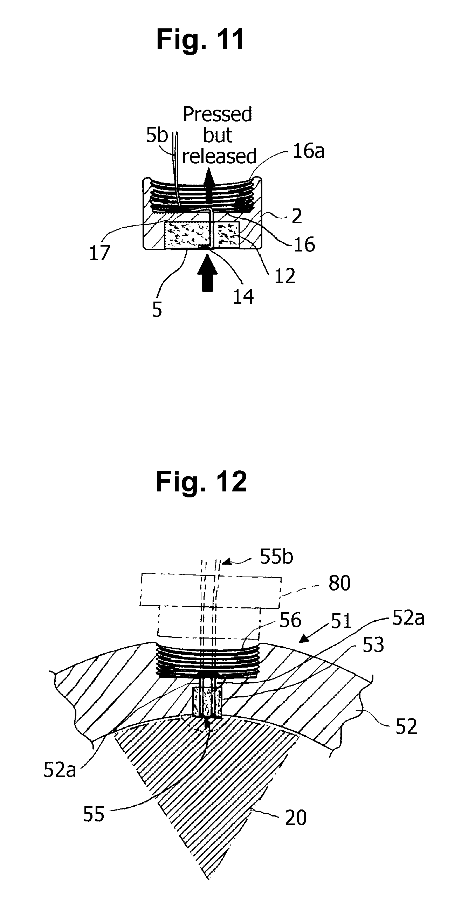

With reference to FIG. 12 to FIG. 21, an example of conventional mould clamping force measuring sensor will be outlined.

FIG. 12 shows a part of a conventional mould clamping force measuring sensor 51, and this mould clamping force measuring sensor 51, which is square bar-like and semi-elliptical annulus-like, has a configuration in which one sensor holder 52 which holds a strain sensor 55 made up of a strain gage, for example, at the internal circumferential surface of the sensor holder 52 in the central portion thereof, and the other sensor holder (not shown) which is formed in the same manner as this one sensor holder 52 are openably connected by hinge connection to provide an elliptical annulus-like shape as a whole.

The conventional mould clamping force measuring sensor 51 is configured such that said sensor holder 52 is installed on the outer circumference of a tie bar 20 which is connected to a mould supporting mechanism part (not shown) used with a mould for measuring the mould clamping force applied to the tie bar 20 by means of said strain sensor 55. In FIG. 12, the reference numeral 55b denotes a signal cable consisting of two conductors.

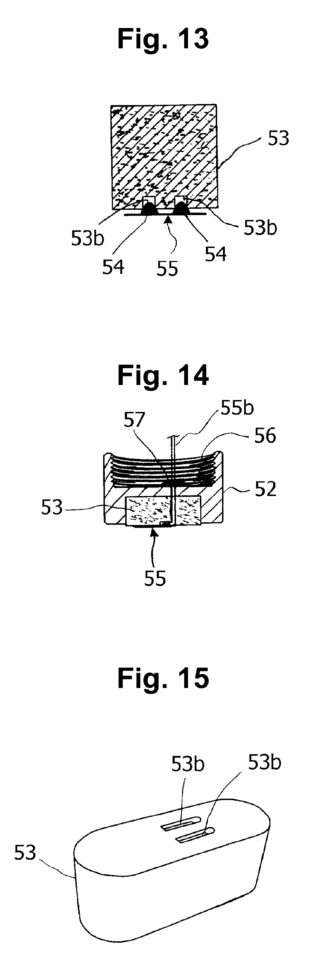

As shown in FIG. 13, with said strain sensor 55, a sensor part, such as a strain gage, is provided on a sensor holding piece, which is like a film, for example, and to said sensor part, the end parts of the conductors of the two-conductor signal cable 55b are connected by means of two soldering parts 54, which are slightly bulged out from the surface of the sensor holding piece, respectively, such that, through the two-conductor signal cable 55b, a strain signal generated in said sensor part is transmitted to a signal processing circuit (not shown) provided externally to said mould clamping force measuring sensor 51.

Next, the holding structure of the strain sensor 55 in said sensor holder 52 will be described in detail with reference also to FIG. 13 to FIG. 18.

FIG. 13 shows the arrangement relationship between an elastic fitting part 53, which is rubber seat-like, and the strain sensor 55, and FIG. 14 shows a sectional view for said sensor holder 52, strain sensor 55, signal cable 55b, and elastic fitting part 53.

As shown in FIG. 12, a screw accepting hole 56 for a fitting cylindrical threaded piece 80 is provided in the outer circumference surface of said sensor holder 52 in the central portion thereof.

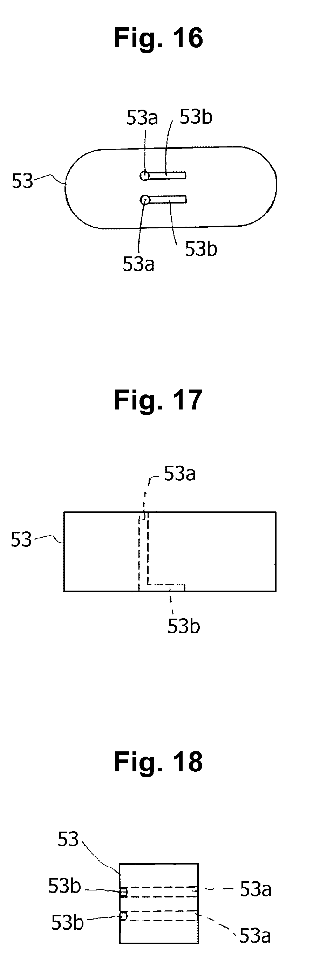

In addition, as shown in FIG. 12 and FIG. 17, in the central portion of said sensor holder 52, an elastic fitting part 53 in which two through holes 53a are provided is fitted into a recessed part which is formed from the internal circumferential surface of said sensor holder 52 toward the screw accepting hole 56.

Further, also in a wall portion between said screw accepting hole 56 in said sensor holder 52 and the recessed portion in the same into which the elastic fitting part 53 is fitted, two cable-conductor insertion holes 52a are provided.

And, on the end face of said elastic fitting part 53 that is positioned on the internal circumference side of said sensor holder 52, the strain sensor 55 shown in FIG. 13 is disposed in tight contact with that end face, and the signal cable 55b is run to the outside through the two through holes 53a, the two cable-conductor insertion holes 52a, and the screw accepting hole 56. To the outer face of said strain sensor 55, a protection film (not shown) is affixed.

Next, said elastic fitting part 53 will be described with reference to FIG. 15 to FIG. 18. Said elastic fitting part 53 is formed into an elongated oval track shape as a whole, using a rubber material, for example.

In this elastic fitting part 53, the two through holes 53a, which have a diameter of 0.7 mm or so, are provided with a prescribed spacing from each other, as described above, and in the end face of this elastic fitting part 53 that is to be positioned on the internal circumference side of said sensor holder 2 (the top face in FIG. 15), two accommodation grooves 53b having a long and slender rectangular shape for butting said two soldering parts 54 are provided such that they are communicated with said two through holes 53a, respectively, as shown in FIG. 15 to FIG. 18.

Said two accommodation grooves 53b have approximate dimensions of, for example, a longer side length of 3.5 mm, a shorter side length of 1 mm, and a depth of 0.5 mm.

The conductors of said two-conductor signal cable 55b are caused to penetrate said two through holes 53a and two cable-conductor insertion holes 52a, then on a bottom part 56a of said screw accepting hole 56 in said sensor holder 52 in locations where the two cable-conductor insertion holes 52a open, a portion of the conductors of said two-conductor signal cable 55b is anchored to the bottom part 56a by brazing, for example, to form a connection part 57, and further run to the outside through said screw accepting hole 56.

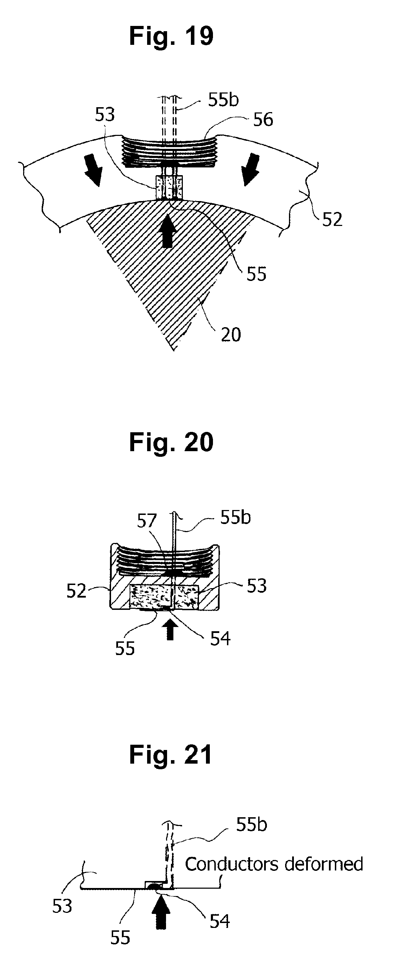

The conventional mould clamping force measuring sensor 51 as described above has a configuration in which the two soldering parts 54 of said two-conductor signal cable 55b are simply butted against the two accommodation grooves 53b having a long and slender rectangular, thus as shown in FIG. 13, a state in which the strain sensor 55 will not be tightly contacted with the end faces of the elastic fitting parts 53 being slightly lifted (with a clearance being produced), which causes the position of the strain sensor 55 to be unstable, and as a result of this, there has arisen a problem that, as shown in FIG. 19, in case where forces (pressing forces as shown with arrows) are applied to the sensor part constituting said strain sensor 55 from the sensor holder 52 or the tie bar 20, misalignment, inclination, failure, and the like of the sensor part may be caused, which results in the durability of the mould clamping force measuring sensor 51 being degraded, and the output characteristics being deteriorated.

In addition, the conventional mould clamping force measuring sensor 51 has a configuration in which a portion of the conductors of said two-conductor signal cable 55b is anchored to the bottom part 56a of said screw accepting hole 56 in said sensor holder 52 in locations where the two cable-conductor insertion holes 52a open, by brazing, for example, to form the connection part 57, thus the conductors of the two-conductor signal cable 55b have no allowance for external force, and there has been a difficulty that, in case where a force (a pressing force) is applied to the sensor part constituting said strain sensor 55 from said sensor holder 52 or tie bar 20, the force may also be applied to the conductors of the two-conductor signal cable 55b, and as a result of this, as shown in FIG. 20 and FIG. 21, the two soldering parts 54 of the conductors of the two-conductor signal cable 55b or a portion in the vicinity thereof may be deformed or otherwise damaged, resulting in wire breakage.

In Japanese Patent Laid-Open Publication No. 2003-112344, a mould clamping force detection apparatus is proposed which comprises a frame member which is freely fittable to the tie bar from the side, sensor urging means for pressing the strain sensor incorporated in this frame member and held at the projection end thereof against the tie bar, and the like. However, with this apparatus, the stability of the position of the strain sensor, and the prevention of wire breakage of the signal cable connected to the strain sensor are not taken into account.

Conventionally, there have been no mould clamping force measuring sensors which are capable of stably holding the strain sensor for measuring the mould clamping force acting on the tie bar, and which are excellent in durability, having good output characteristics, and are further designed in consideration of possible wire breakage of the signal cable.

### Summary of the Invention

The purpose of the present invention is to provide a mould clamping force measuring sensor which can stably hold the strain sensor for measuring the mould clamping force acting on the tie bar, and which is excellent in durability and good in output characteristics, and further is intended to prevent wire breakage of the signal cable.

According to the present invention, there is provided a mould clamping force measuring sensor as claimed in any of the accompanying claims.

In particular, there is provided mould clamping force measuring sensor comprising: first and second semi-elliptical annulus-like sensor holders; first and second elastic fitting parts, each fitted in a central portion of a respective sensor holder with an end face being faced to the internal circumferential surface side of that respective sensor holder; first and second strain sensors being contacted with an end face of a respective elastic fitting part; and first and second signal cables, each signal cable having an end part which is solder-connected to a respective strain sensor and each signal cable being passed through a respective elastic fitting part and a wall portion of a central portion of a respective sensor holder to the outside; wherein the sensor holders are connected to each other at respective ends to provide an elliptical annulus-like configuration suitable for being installed on the outer circumference of a tie bar for measuring the mould clamping force applied to said tie bar by means of said strain sensors, characterised by the end face of at least one elastic fitting part being provided with elongated recessed grooves for accommodating bulged portions of soldering parts of a respective signal cable.

### Brief Description of the Drawings

FIG. 1 is a schematic front view of a mould clamping force measuring sensor pertaining to an exemplary embodiment of the present invention;
FIG. 2 is an enlarged, perspective side view illustrating the strain sensor and signal cable constituting the mould clamping force measuring sensor pertaining to the present exemplary embodiment;
FIG. 3 is a partially enlarged, sectional view of the sensor holder, strain sensor, signal cable, elastic fitting part, and tie bar constituting the mould clamping force measuring sensor pertaining to the present exemplary embodiment;
FIG. 4 is a partially sectional view illustrating the strain sensor being tightly contacted with the elastic fitting part in the mould clamping force measuring sensor pertaining to the present exemplary embodiment;
FIG. 5 is a partially sectional view illustrating the cushioning connection part of the signal cable in the mould clamping force measuring sensor pertaining to the present exemplary embodiment;
FIG. 6 is a perspective side view when viewed from the end face of the elastic fitting part that is to be faced to the tie bar in the mould clamping force measuring sensor pertaining to the present exemplary embodiment;
FIG. 7 is a top view when viewed from the end face of the elastic fitting part that is to be faced to the tie bar in the mould clamping force measuring sensor pertaining to the present exemplary embodiment;
FIG. 8 is a front view of the elastic fitting part in the mould clamping force measuring sensor pertaining to the present exemplary embodiment;
FIG. 9 is a side view of the elastic fitting part in the mould clamping force measuring sensor pertaining to the present exemplary embodiment;
FIG. 10 is an explanatory drawing illustrating how the forces act on the strain sensor in the mould clamping force measuring sensor pertaining to the present exemplary embodiment;
FIG. 11 is an explanatory drawing illustrating how the force is released by the cushioning connection part of the signal cable in the mould clamping force measuring sensor pertaining to the present exemplary embodiment;
FIG. 12 is a partially enlarged, sectional view of the sensor holder, strain sensor, signal cable, elastic fitting part, and tie bar constituting a conventional mould clamping force measuring sensor;
FIG. 13 is a partially sectional view illustrating the strain sensor being insufficiently contacted with the elastic fitting part in the conventional mould clamping force measuring sensor;
FIG. 14 is a partially sectional view illustrating the connection part of the signal cable in the conventional mould clamping force measuring sensor;
FIG. 15 is a perspective side view when viewed from the end face of the elastic fitting part that is to be faced to the tie bar in the conventional mould clamping force measuring sensor;
FIG. 16 is a top view when viewed from the end face of the elastic fitting part that is to be faced to the tie bar in the conventional mould clamping force measuring sensor;
FIG. 17 is a front view of the elastic fitting part in the conventional mould clamping force measuring sensor;
FIG. 18 is a side view of the elastic fitting part in the conventional mould clamping force measuring sensor;
FIG. 19 is an explanatory drawing illustrating how the forces act on the strain sensor in the conventional mould clamping force measuring sensor;
FIG. 20 is an explanatory drawing illustrating how the force acts on the strain sensor in the conventional mould clamping force measuring sensor;
FIG. 21 is an explanatory drawing illustrating how the signal cable is deformed in the conventional mould clamping force measuring sensor.

### Detailed Description

Hereinbelow, a mould clamping force measuring sensor pertaining to an exemplary embodiment of the present invention will be described in detail with reference to the attached drawings.

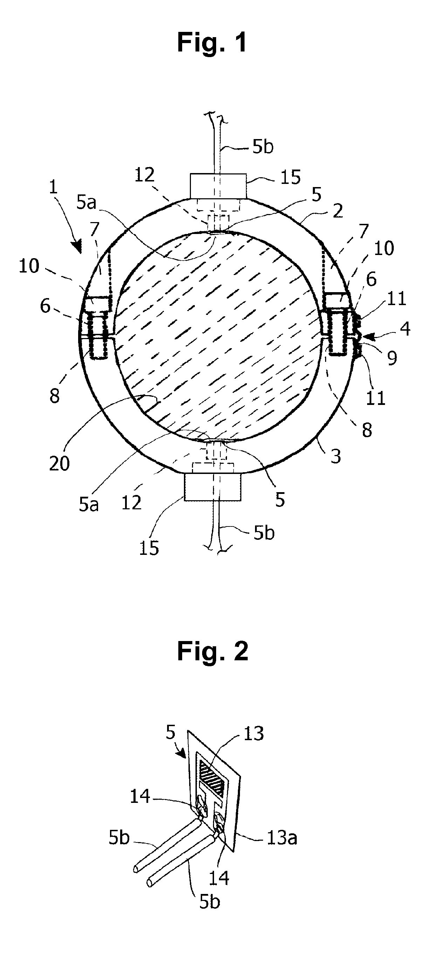

First, with reference to FIG. 1 to FIG. 11, a mould clamping force measuring sensor 1 pertaining to an exemplary embodiment of the present invention will be described.

As shown in FIG. 1, the mould clamping force measuring sensor 1 pertaining to the present exemplary embodiment is configured to provide an elliptical annulus-like shape as a whole by using a hinge 4 for openably connecting one sensor holder 2 which is square bar-like and semi-elliptical annulus-like, holding a strain sensor 5 made up of, for example, a strain gage at the internal circumferential surface of the sensor holder 2 in the central portion thereof, with the other sensor holder 3 which is square bar-like and semi-elliptical annulus-like, holding a strain sensor 5 made up of, for example, a strain gage at the internal circumferential surface of the sensor holder 3 in the central portion thereof, at one ends of these sensor holders 2, 3.

And the mould clamping force measuring sensor 1 pertaining to the present exemplary embodiment is configured such that said both sensor holders 2, 3 are installed on the outer circumference of a tie bar 20 which is connected to a mould supporting mechanism part (not shown) for a mould, for measuring the mould clamping force applied to the tie bar 20 by means of said strain sensor 5, 5. In FIG. 1, the reference numeral 5a denotes a protection film for the strain sensor 5, 5 that is affixed to the inner circumference of the sensor holder 2, 3, and the reference numeral 5b denotes a signal cable consisting of two conductors.

More particularly, with said one sensor holder 2, in the vicinity of both end faces thereof, a screw insertion recess 7 communicating with a threaded through hole 6 which penetrates to the end face of said one sensor holder 2 is provided, and in the central portion of said one sensor holder 2, said strain sensor 5 facing the internal circumferential surface side thereof is held.

With said other sensor holder 3, both end faces are provided with a screw accepting hole 8, respectively, that is opposed to the threaded through hole 6 provided for said one sensor holder 2, and in the central portion of said other sensor holder 3, said strain sensor 5 facing the internal circumferential surface side thereof is held.

Said both sensor holders 2, 3 thus configured are installed on the outer circumference of the tie bar 20, and at the respective opposite end parts on the hinged side and the open side, which is the other end side, a clamping screw 10 is driven in into said threaded through hole 6 and then into the screw accepting hole 8 for clamping and fixing said both sensor holders 2, 3 to the outer circumference of the tie bar 20 to tightly contact the strain sensor 5, 5 with the outer circumference of the tie bar 20 such that the mould clamping force applied to the tie bar 20 can be measured by means of said strain sensor 5, 5.

Said hinge 4 is made up of an elastic rubber piece 9 which is, for example, substantially quadrangular and in the form of a thin plate, and by using said hinge 4 and setscrews 11, the respective other ends of said both sensor holders 2, 3 are connected openably in the circumferential direction (the direction in which the other ends of the sensor holders 2, 3 are separated from or brought close to each other).

Next, the holding structure of the strain sensor 5 in said sensor holder 2 will be described in detail with reference also to FIG. 2 to FIG. 9.

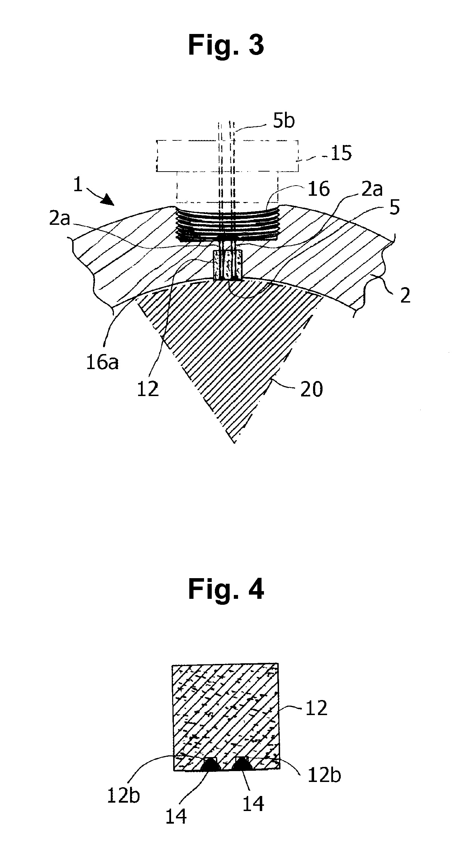

FIG. 2 is an enlarged view of said strain sensor 5 and signal cable 5b which constitute the mould clamping force measuring sensor 1, and FIG. 3 is an enlarged sectional view of said sensor holder 2, strain sensor 5, signal cable 5b, an elastic fitting part 12, which is rubber seat-like and will be later described in detail, and said tie bar 20.

As shown in FIG. 2, with said strain sensor 5, a sensor part 13, such as a strain gage, is provided on a sensor holding plate 13a, which is like a film, for example, and to this sensor part 13, the end parts of the conductors of the two-conductor signal cable 5b are connected by means of two soldering parts 14, which are slightly bulged out from the surface of the sensor holding plate 13a, respectively, such that, through the two-conductor signal cable 5b, a strain signal generated in said sensor part 13 is transmitted to a signal processing circuit (not shown) provided externally to said mould clamping force measuring sensor 1.

As shown in FIG. 3, a screw accepting hole 16 for a fitting cylindrical threaded piece 15 is provided in the outer circumference surface of said sensor holder 2 in the central portion thereof.

In addition, as shown in FIG. 3, in the central portion of said sensor holder 2, an elastic fitting part 12 in which two through holes 12a are provided is fitted into a recessed part which is formed from the internal circumferential surface of said sensor holder 2 toward the screw accepting hole 16.

Further, also in a wall portion between said screw accepting hole 16 in said sensor holder 2 and the recessed portion in the same into which the elastic fitting part 12 is fitted, two cable-conductor insertion holes 2a are provided. And, on the end face of said elastic fitting part 12 that is positioned on the internal circumference side of said sensor holder 2, the strain sensor 5 shown in FIG. 2 is disposed in tight contact with that end face, and then the signal cable 5b is run to the outside through the two through holes 12a, the two cable-conductor insertion holes 2a, and the screw accepting hole 16. To the outer face of said strain sensor 5, said protection film 5a is affixed.

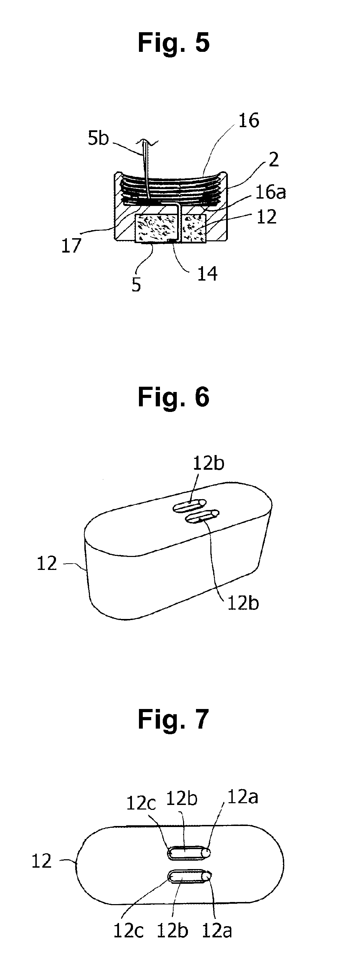

Next, said elastic fitting part 12 will be described with reference to FIG. 6 to FIG. 9. Said elastic fitting part 12 is formed into an elongated oval track shape, using a rubber material, for example, such that the whole geometry roughly provides a width of 16 mm, a depth of 6 mm, and a height of 6 mm, for example.

In this elastic fitting part 12, the two through holes 12a, which have a diameter of 0.7 mm or so, are provided with a prescribed spacing from each other, as described above, and in the end face of this elastic fitting part 12 that is to be positioned on the internal circumference side of said sensor holder 2 (the top face in FIG. 6), two elongated recessed grooves 12b having an elongated oval track shape for accommodating said two soldering parts 14 are provided such that they are communicated with said two through holes 12a, respectively, as shown in FIG. 6 to FIG. 8.

Said two elongated recessed grooves 12b have approximate dimensions of, for example, a longer side length of 3.5 mm, a shorter side length of 1 mm, and a depth of 0.5 mm, and are formed in a tapered shape flared toward the end face of said elastic fitting part 12 that is to be positioned on the internal circumference side of said sensor holder 2.

Further, the end part 12c of said two elongated recessed grooves 12b on the side opposite to said through hole 12a is formed into a shape of a circular arc having a radius of 0.5 mm or so.

By providing said two elongated recessed grooves 12b with the above-described geometry, when said strain sensor 5 is disposed in tight contact with the elastic fitting part 12, the bulged portions of said two soldering part 14 are accommodated in said two elongated recessed grooves 12b as shown in FIG. 4, thereby said strain sensor 5 being capable of being disposed in tight contact with the tie bar 20 with no bulges being produced on the outer face, a flat disposed condition being assured.

Further, for said two-conductor signal cable 5b, a cushioning connection part 17 is provided inside said sensor holder 2.

In other words, as shown in FIG. 5, the conductors of said two-conductor signal cable 5b are caused to penetrate said two through holes 12a and two cable-conductor insertion holes 2a, then bent on a bottom part 16a of said screw accepting hole 16 in said sensor holder 2 to run 4 mm to 6 mm or so, for example, along the bottom part 16a before being again raised for being run to the outside through said screw accepting hole 16, the portion which runs along the bottom part 16a being anchored to the bottom part 16a by brazing, for example, to form a cushioning connection part 17.

The elements including the strain sensor 5 for the other sensor holder 3 are configured in exactly the same manner.

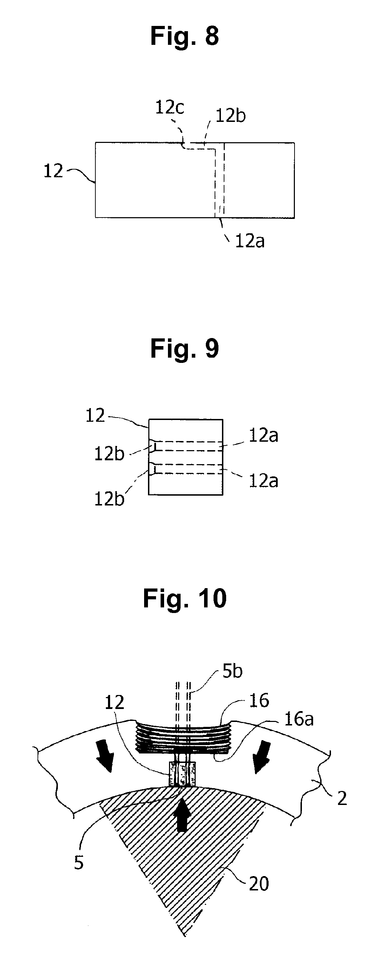

Next, the operation of the mould clamping force measuring sensor 1 as configured above pertaining to the present exemplary embodiment will be described with reference to FIG. 10, FIG. 11 and in addition, Table 1, mainly about the mode of mounting said strain sensor 5 onto the elastic fitting part 12, and the function of the cushioning connection part 17.

According to the mould clamping force measuring sensor 1 pertaining to the present exemplary embodiment, as described above, the mode of mounting said strain sensor 5 onto the elastic fitting part 12 is configured such that the bulged portions of the two soldering parts 14 constituting a part of said strain sensor 5 are accommodated in said two elongated recessed grooves 12b provided in the elastic fitting part 12, thereby the outer face of said strain sensor 5 being disposed in tight contact with the tie bar 20 with no bulges being produced on the outer face, a flat disposed condition being assured, which allows the sensor part 13 constituting said strain sensor 5 to be held in an extremely stable state.

As a result of this, in actually measuring the strain of the tie bar 20 by means of the mould clamping force measuring sensor 1 pertaining to the present exemplary embodiment, even if forces (pressing forces as shown with arrows in FIG. 10) are applied to the sensor part 13 constituting said strain sensor 5 by the sensor holder 2 and the tie bar 20, the sensor part 13 will be free from misalignment, inclination, and failure, which allows a mould clamping force measuring sensor 1 having a high durability, and being extremely excellent in strain detection performance to be provided.

In addition, for the conductors of the two-conductor signal cable 5b which is connected to said strain sensor 5, the cushioning connection part 17 as described above is provided in the bottom part 16a of said screw accepting hole 16, thus, for example, in the case where said tie bar 20 applies a force (a pressing force as shown with an arrow in FIG. 11) to the sensor part 13 constituting said strain sensor 5, the conductors of the two-conductor signal cable 5b are deformed in the bent portions in the vicinity of the cushioning connection part 17 in the bottom part 16a so as to be lifted with allowance, resulting in the force applied by the tie bar 20 being cushioned (released), whereby breakage of the conductors of the two-conductor signal cable 5b in said soldering part 14 or the vicinity thereof can be positively avoided.

The following Table 1 gives the results of the test for measuring the strain of the tie bar 20 that was repeatedly carried out 300 times for the respective four samples having a configuration in which a set of said strain sensor 5, said elastic fitting part 12, and the two-conductor signal cable 5b provided with a cushioning connection part 17 are mounted in the sensor holders 2, 3 in the present exemplary embodiment, respectively, being tightly contacted with the tie bar 20. A check to see whether breakage was not caused was made every time the test was repeated 20 times.

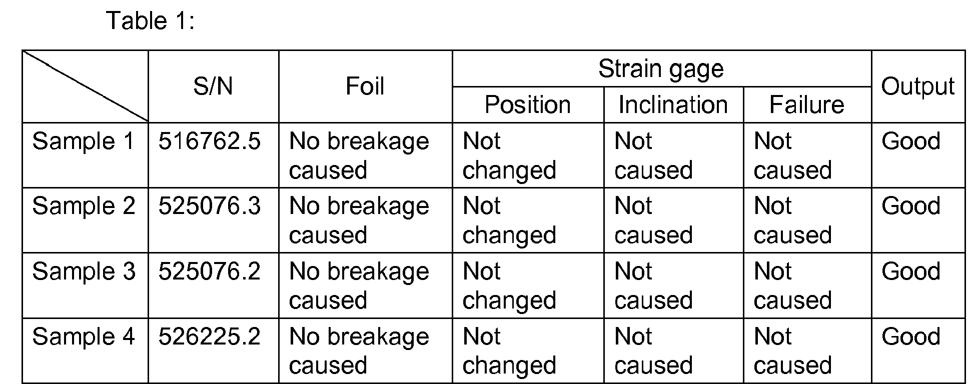

The operation of mounting was performed fairly roughly, but no failure and flaws were found at each sensor.

As can be seen from Table 1, for each of the four samples after the test having been repeated 300 times, it was found that the position of the sensor part (strain gage) was not changed, with no inclination and failure being caused, and no wire breakage occurring. In addition, the output characteristics of said strain sensor 5 were good.

The present invention is also applicable to instruments for measuring the strain force acting on columnar or cylindrical members as well as to instruments for measuring the strain force applied to the tie bar in mould clamping apparatuses as described above.

### Explanation of reference numerals and signs in the drawings

1: Mould clamping force measuring sensor
2: Sensor holder
3: Sensor holder
4: Hinge
5: Strain sensor
5a: Protection film
5b: Signal cable
6: Threaded through hole
7: Screw insertion recess
8: Screw accepting hole
9: Elastic rubber piece
10: Clamping screw
11: Setscrew
12: Elastic fitting part
12a: Through hole
12b: Elongated recessed groove
12c: End part
13: Sensor part
13a: Sensor holding plate
14: Soldering part
15: Fitting cylindrical threaded piece
16: Screw accepting hole
16a: Bottom part
17: Cushioning connection part
20: Tie bar

## Claims

1. A mould clamping force measuring sensor (1) comprising:
- first (2) and second (3) semi-elliptical annulus-like sensor holders;
- first and second elastic fitting parts (12), each fitted in a central portion of a respective sensor holder with an end face being faced to the internal circumferential surface side of that respective sensor holder;
- first and second strain sensors (5) being contacted with an end face of a respective elastic fitting part; and
- first and second signal cables (5b), each signal cable having an end part which is solder-connected to a respective strain sensor and each signal cable being passed through a respective elastic fitting part and a wall portion of a central portion of a respective sensor holder to the outside;
wherein the sensor holders (2, 3) are connected to each other at respective ends to provide an elliptical annulus-like configuration suitable for being installed on the outer circumference of a tie bar for measuring the mould clamping force applied to said tie bar by means of said strain sensors,
**characterised by** the end face of at least one elastic fitting part (12b) being provided with elongated recessed grooves (14) for accommodating bulged portions of soldering parts of a respective signal cable.

2. A mould clamping force measuring sensor (1) according to claim 1 wherein the wherein the sensor holders (2, 3) have a square cross-section.

3. A mould clamping force measuring sensor (1) according to claim 1 or claim 2 wherein the sensor holders (2, 3) are connected to each other at a respective one end by a hinge (4).

4. A mould clamping force measuring sensor (1) according to claim 3 wherein the sensor holders (2, 3) are connected to each other at a respective other end by screw-fixing (10).

5. A mould clamping force measuring sensor (1) according to any of the preceding claims further comprising a cushioning connection part (17) which fixes and holds a part of a signal cable (5b) in a respective sensor holder (2, 3) whilst allowing for bending.

6. A mould clamping force measuring sensor (1) according to claim 5 wherein each signal cable (5b) is passed through a through-hole (12a) provided in the respective elastic fitting part (12), then though a cable-conductor insertion hole provided in the wall portion of the central portions of the respective sensor holder (2, 3), and then to the outside through a screw accepting hole (16) for a fitting cylindrical threaded piece provided in the outer circumference surface of the central portion of the respective sensor holder; and wherein the cushioning connection part (17) is located at the bottom (16a) of said screw accepting hole.

7. A mould clamping force measuring sensor (1) according to claim 6, wherein each signal cable (9b) has two conducting paths which respectively pass through two through-holes (12a) provided in the respective elastic fitting part (12) and then though two cable-conductor insertion holes provided in the wall portion of the central portion of the respective sensor holder (2, 3); and wherein two elongated recessed grooves (12b) are provided in the end face (12c) of each elastic fitting part (12) for accommodating bulged portions of soldering parts of the two conductive paths of each signal cable.

8. A mould clamping force measuring sensor (1) according to any preceding claim wherein each elastic fitting part (12) is oval shaped.

9. A mould clamping force measuring sensor (1) according to any preceding claim wherein each elongated recessed groove (12b) has an oval and tapered geometry.
